(19) Europäisches Patentamt
European Patent Office
Office européen des brevets

(11) EP 3 379 200 A2

(12) DEMANDE DE BREVET EUROPEEN

(43) Date de publication:
26.09.2018 Bulletin 2018/39

(51) Int Cl.:
G01C 21/00 (2006.01)          G08G 5/00 (2006.01)

(21) Numéro de dépôt: 18161143.5

(22) Date de dépôt: 12.03.2018

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 21.03.2017 FR 1700291

(71) Demandeur: THALES
92400 Courbevoie (FR)

(72) Inventeurs:
• DACRE-WRIGHT, Benoit
31036 TOULOUSE Cedex 1 (FR)
• POISSON, Didier
31036 TOULOUSE Cedex 1 (FR)
• DEKER, Guy
31036 TOULOUSE Cedex 1 (FR)
• SAVARIT, Vincent
31036 TOULOUSE Cedex 1 (FR)

(74) Mandataire: Bréda, Jean-Marc et al
Marks & Clerk France
Conseils en Propriété Industrielle
Immeuble " Visium "
22 Avenue Aristide Briand
94117 Arcueil Cedex (FR)

(54) PROCEDE D'AJUSTEMENT DE TRAJECTOIRE DE REJOINTE POUR AERONEF

(57) Le domaine général de l'invention est celui des procédés d'ajustement d'une trajectoire de rejointe d'un plan de vol d'un aéronef, ledit procédé étant mis en oeuvre dans un système de gestion de vol (1) dudit aéronef. Dans une première étape, la trajectoire de rejointe ($T_{PMC}$) comporte un point de maintien de consigne de guidage (PMC) à atteindre situé dans le prolongement d'une consigne de guidage, et positionné manuellement ou automatiquement, la consigne de guidage n'étant plus nécessairement maintenue passé ce point de maintien de consigne. Cette première étape peut être précédée d'une étape de rejointe d'une consigne de guidage ou d'une étape de recherche de l'intersection de la trajectoire de consigne de guidage en cours avec un segment du plan de vol.

FIG. 2

EP 3 379 200 A2

**Description**

Le domaine de l'invention est celui de la navigation et du guidage des aéronefs. Plus précisément, le domaine de l'invention est celui de la détermination d'une trajectoire dite de rejointe lorsque le pilote a dû s'écarter de son plan de vol initial. On entend par plan de vol la référence latérale et verticale correspondant au vol planifié de l'aéronef.

Actuellement, lorsque le pilote doit s'écarter temporairement de son plan de vol, soit à la demande du contrôle aérien, soit pour faire face à une situation imprévue comme une perturbation météorologique, par exemple, il interrompt la navigation de long du plan de vol en sélectionnant une consigne de guidage dite consigne sélectée. Dans ce cas, les hypothèses de prédiction le long du plan de vol ne traduisent plus de manière fidèle et fiable l'évolution future du vol. En particulier, pour une consigne de cap, la longueur de trajectoire qui va être volée jusqu'à la destination ou jusqu'à un point futur où l'avion aura rejoint le plan de vol, n'est pas connue. Elle n'est plus qu'estimée de façon simpliste par ces hypothèses. Or le pilote continue d'avoir besoin de prédictions précises concernant la suite du vol. En particulier, il a besoin de savoir si la quantité actuelle de carburant est toujours suffisante jusqu'à la fin de vol ou de connaître l'évolution de son heure d'arrivée. Par ailleurs, lorsque l'avion est en descente, le pilote doit veiller à anticiper son profil de descente pour tenir les prochaines contraintes d'altitude ou de vitesse imposées par les procédures, être capable de se stabiliser à une hauteur minimale avant le seuil de piste, et éventuellement veiller à tenir une contrainte de temps d'arrivée en un point donné de son plan de vol, imposé par le contrôle aérien pour assurer le séquencement des aéronefs en approche sur un même aéroport. Toutes ces prédictions doivent pouvoir reposer sur une hypothèse de trajectoire latérale et verticale aussi proche que possible des hypothèses opérationnelles courantes. Lorsque le contrôle aérien, ou des circonstances particulières, imposent un écart latéral par une consigne de cap, ou un palier à altitude constante, ou une consigne de vitesse particulière, les hypothèses de retour au plan de vol n'étant pas connues, le système n'est généralement pas en mesure de fournir au pilote des indications opérationnellement pertinentes.

Si le pilote doit reprendre ensuite sa navigation le long du plan de vol, l'hypothèse de trajectoire doit permettre de passer de la consigne de guidage courante à un point de retour au plan de vol, alors même que le guidage courant n'est pas encore convergeant. Faute d'une telle trajectoire, la manoeuvre de retour au plan de vol reste souvent à la charge du pilote, nécessitant une attention soutenue de sa part jusqu'à ce que les conditions de retour au guidage automatique le long du plan de vol soient réunies. Cette charge de travail est parfois malvenue dans des phases de vol chargées où le pilote doit se consacrer à de nombreuses autres tâches de communication ou de surveillance.

Le problème est donc de fournir au pilote une hypothèse de trajectoire conforme aux attente du pilote et au contexte opérationnel, de manière à faciliter la gestion du vol et le retour au guidage le long du plan de vol ou au plus tard l'alignement final et la stabilisation avant l'atterrissage.

Actuellement, les prédictions le long du plan de vol sont toujours calculées selon une hypothèse simplifiée et généralement non volable de retour immédiat au plan de vol, depuis la position courante de l'aéronef, et parfois vers un segment actif qui n'est plus opérationnellement pertinent.

Pour résoudre ce problème, dans le cas d'un écart latéral, différents procédés ont été proposés. Ainsi, la demande FR 3 031 175 intitulée « Procédé de rejointe automatique d'une route d'un aéronef » décrit un procédé de calcul de trajectoire de rejointe permanente du plan de vol.

Diverses stratégies de rejointe sont envisageables, privilégiant ou non l'intersection du plan de vol par la consigne courante de cap de l'avion. Lorsqu'aucune intersection n'existe entre la consigne de cap courante et le plan de vol, la trajectoire de rejointe capture l'un des legs du plan de vol, depuis la position et le cap courants de l'avion, selon un angle déterminé L'angle déterminé peut être, par exemple, égal à 45° ou à 90° selon la situation de l'aéronef. On entend par « leg » une portion unitaire du plan de vol rejoignant une condition finale selon une manoeuvre spécifiée par le type du leg. Les différents types de legs possibles sont définis par la norme ARINC 424. Cette proposition d'une trajectoire de rejointe est un pré-requis nécessaire pour maintenir une hypothèse de trajectoire de rejointe satisfaisante et cohérente et permettre ainsi d'informer le pilote sur les prédictions plus fiables de temps et de carburant jusqu'à la destination, sur le suivi de son profil de descente, la tenue des prochaines contraintes ou la stabilisation avant atterrissage.

Similairement, dans le cas d'un écart vertical par rapport au plan de vol, les systèmes de gestion de vol selon l'état de l'art permettent généralement de prédire le retour au profil vertical du plan de vol.

Ces stratégies de rejointe ont un point commun : la trajectoire de rejointe du plan de vol est toujours calculée selon une hypothèse de retour au plus tôt au plan de vol, depuis la position courante de l'aéronef. Lorsque la rejointe est proposée par une capture du plan de vol par la consigne de guidage courante, c'est parce que cette consigne constitue la meilleure hypothèse de rejointe à partir de la position courante.

La proposition de trajectoire issue de ces différents procédés peut ne pas convenir opérationnellement, soit parce qu'elle rejoint le plan de vol plus tôt que ce qu'envisage le pilote, soit parce qu'elle reste en conflit avec une perturbation météorologique, un relief, ou le trafic environnant, ou encore qu'elle n'est pas compatible de la tenue d'une contrainte ou de la stabilisation de l'aéronef avant l'atterrissage.

Par conséquent, le contexte opérationnel courant nécessite de rejoindre le plan de vol différemment, par exemple à une plus grande distance en ignorant les portions de plan de vol les plus proches, ou de maintenir encore la consigne de guidage sur une certaine distance ou pendant un certain temps, ou jusqu'à une certaine altitude. La rejointe n'est alors effective qu'une fois cette phase accomplie. Les procédés actuels ne permettent pas au pilote d'ajuster précisément la trajectoire de rejointe pour correspondre à une telle hypothèse.

De même en latéral, lorsque le respect d'une contrainte donnée nécessite de conserver le cap de consigne courant pendant un certain temps avant de rejoindre le plan de vol, ce maintien de cap n'est pas proposé au pilote. Il ne possède donc pas un ensemble de prédictions opérationnellement satisfaisant. Il doit maintenir le cap et attendre que les conditions souhaitées soient remplies pour pouvoir alors identifier et ajuster la rejointe du plan de vol. Par exemple, en phase d'approche, un pilote suit un cap de consigne à l'opposé de l'axe d'approche finale. Il s'éloigne donc de la piste, avant de faire demi-tour pour atterrir. Il est encore trop proche de la piste et trop haut ou trop rapide, pour qu'un demi-tour immédiat lui permette d'atterrir. Une rejointe immédiate de son axe d'approche ne lui fournit donc pas une hypothèse satisfaisante pour gérer son approche. Et rien ne lui permet de savoir de manière claire jusqu'où il doit maintenir son cap courant pour être dans les conditions satisfaisantes pour se stabiliser avant l'atterrissage. Il doit attendre que la trajectoire de rejointe immédiate devienne satisfaisante.

Le pilote reste responsable de la sécurité du vol et peut avoir besoin d'ajuster latéralement la trajectoire de retour proposée. Cependant, la sélection de consignes de guidage latéral n'offre aujourd'hui qu'un degré de liberté, le cap, pour ajuster latéralement. Ce degré de liberté peut s'avérer inefficace pour obtenir la trajectoire tactique opérationnellement souhaitée par le pilote.

Le procédé de rejointe de trajectoire selon l'invention ne présente pas ces inconvénients. En effet, ce procédé, à la différence des procédés selon l'art antérieur, ne cherche pas à déterminer la trajectoire de rejointe la plus courte mais prend en compte d'autres contraintes de vol en déterminant, entre autre, un point de maintien de consigne de guidage à atteindre. Plus précisément, l'invention a pour objet un procédé d'ajustement d'une trajectoire de rejointe d'un plan de vol d'un aéronef, ledit procédé étant mis en oeuvre dans un système de gestion de vol dudit aéronef, caractérisé en ce que, dans une première étape, la trajectoire de rejointe comporte un point de maintien de consigne de guidage à atteindre situé dans le prolongement d'une consigne de guidage, la consigne de guidage n'étant plus nécessairement maintenue passé ce point de maintien de consigne.

Avantageusement, un point de maintien de consigne de guidage correspond à un point géographique le long de la consigne de guidage, ledit point géographique étant défini soit par une distance, soit par une durée temporelle, soit par une variation d'altitude ou une altitude à atteindre, soit par le croisement de la trajectoire avec une radiale, c'est-à-dire une demi-droite définie par un point géographique et une direction.

Avantageusement, à partir du point de maintien de consigne de guidage, la trajectoire de rejointe est calculée de façon que ladite trajectoire de rejointe regagne le plan de vol au plus tôt.

Avantageusement, le point de maintien de consigne de guidage est ajusté de façon manuelle par un opérateur en fonction d'une contrainte de pilotage ou de navigation.

Avantageusement, lorsque, compte-tenu d'une contrainte de pilotage ou de navigation, la longueur de trajectoire est inappropriée pour respecter ladite contrainte en suivant la trajectoire exploitant le point de maintien de consigne de guidage en cours, la première étape est précédée d'une étape préliminaire de résolution de ladite contrainte, le point de maintien de consigne de guidage étant ajusté de façon automatique.

Avantageusement, la première étape est précédée d'une trajectoire de rejointe d'une consigne de guidage.

Avantageusement, la première étape est précédée d'une étape de recherche de l'intersection de la trajectoire de consigne de guidage en cours avec un segment du plan de vol.

Avantageusement, la consigne de guidage est une consigne de cap.

Avantageusement, la dite étape de rejointe d'un cap de consigne comporte un ensemble de segments droits ou courbes suivi du segment droit de maintien de la consigne de cap.

Avantageusement, ladite étape de rejointe d'un cap de consigne comporte au moins trois segments, un segment de mise en roulis de l'aéronef, un segment courbe de virage entre le cap courant suivi par l'aéronef et le cap de consigne et un segment rectiligne selon le cap de consigne.

Avantageusement, le cap de consigne est ajusté de façon manuelle par un opérateur ou de façon automatique en fonction d'une contrainte de distance de navigation.

Avantageusement, le segment du plan de vol étant déterminé, la trajectoire de rejointe comporte deux changements de cap successifs, le premier permettant de passer d'un cap de consigne à un cap de capture et le second changement de cap permettant de passer du cap de capture au cap du segment du plan de vol.

Avantageusement, une fois atteint le point de maintien de consigne le long du cap de consigne, la trajectoire de rejointe consiste à rejoindre directement un point désigné du plan de vol.

Avantageusement, la consigne de guidage est une consigne de pente verticale ou une consigne de vitesse longitudinale ou une consigne de vitesse verticale.

Avantageusement, la portion du plan de vol vers laquelle est calculée la trajectoire de rejointe est déterminée de façon automatique ou manuelle.

L'invention sera mieux comprise et d'autres avantages apparaîtront à la lecture de la description qui va suivre donnée à titre non limitatif et grâce aux figures annexées parmi lesquelles :

La figure 1 représente le synoptique d'un système de gestion de vol d'un aéronef selon l'invention ;

La figure 2 représente le synoptique général des différentes étapes du procédé selon l'invention ;

La figure 3 représente ces mêmes étapes dans le cas d'un ajustement du point de maintien de consigne ;

La figure 4 représente une première trajectoire de rejointe dans le cas d'un ajustement du point de maintien de consigne ;

La figure 5 représente les étapes du procédé dans le cas d'un ajustement du cap de consigne ;

La figure 6 représente une seconde trajectoire de rejointe dans le cas d'un ajustement automatique du point de maintien de consigne lors d'une capture d'un segment du plan de vol à angle de capture spécifié ;

La figure 7 représente une troisième trajectoire de rejointe dans le cas d'un ajustement automatique du point de maintien de consigne lors d'une rejointe en un point ;

La figure 8 représente une quatrième trajectoire de rejointe dans le cas d'un ajustement automatique du cap lors d'une capture le long du cap de consigne ;

La figure 9 représente une trajectoire de rejointe verticale dans le cas d'un point de maintien de consigne de pente verticale, ajustée pour tenir une contrainte d'altitude.

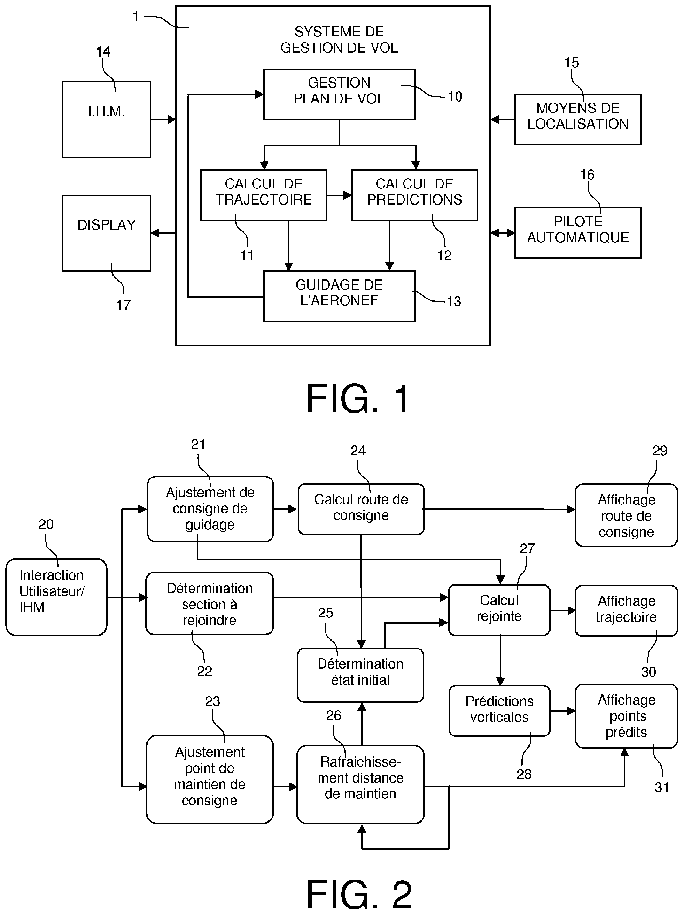

Le procédé de calcul d'ajustement de trajectoire selon l'invention est mis en oeuvre par le système de gestion de vol d'un aéronef. A titre d'exemple, la figure 1 représente un tel système 1 de gestion de vol et ses interactions avec les autres systèmes de bord. Le système de gestion de vol est assuré par un ou plusieurs calculateurs électroniques embarqués. Sa fonction principale est d'assurer la gestion 10 d'un plan de vol déterminé. A partir des informations issues du plan de vol et d'un certain nombre d'informations issues des capteurs de l'appareil et, en particulier, des moyens de localisation 15 ou du pilote automatique 16, la gestion du plan de vol consiste à calculer en permanence la trajectoire 11 de l'appareil et à élaborer un certain nombre de prédictions 12. On entend par prédiction la valeur d'un paramètre de pilotage ou de navigation concernant le présent ou le futur du vol. Par exemple, une prédiction concernant le futur du vol est la durée de vol restant jusqu'à l'atterrissage de l'appareil ou la distance de vol maximale compte-tenu des réserves de carburant. Le calcul de la trajectoire et les prédictions permettent d'élaborer le guidage 13 de l'aéronef, les informations de guidage étant prises en compte dans la gestion du plan de vol.

Ces différentes informations issues de la gestion du plan de vol sont transmises à l'utilisateur, essentiellement au moyen de dispositifs de visualisation ou « displays » 17 qui affichent les différentes informations de pilotage et de navigation.

L'utilisateur peut intervenir sur la gestion du plan de vol pour le modifier au moyen de différentes interfaces homme-machine ou « IHM » 14. Ces interfaces peuvent être des postes de commande de type « KCCU », acronyme signifiant « Keyboard Cursor Control Unit » ou de type « MCDU », acronyme signifiant « Multi-Purpose Control and Display Unit ». Ces différents postes de commande comportent généralement un clavier alphanumérique, un système de contrôle d'un curseur graphique et/ou un écran de visualisation. On peut également utiliser des moyens d'interfaces tactiles disposés ou non sur les écrans de visualisation de la planche de bord.

L'utilisateur du système est généralement le pilote de l'aéronef. Mais la mise en oeuvre du procédé peut être réalisée dans le cadre d'une station sol d'un aéronef sans pilote. Dans ce cas, les interactions et l'affichage sont assurés dans la station sol et les choix correspondants sont envoyés à l'aéronef. Le guidage est alors effectué dans l'aéronef. Selon les choix d'architecture, la trajectoire peut être calculée au sol, et envoyée à bord, ou calculée à bord et téléchargée vers le sol pour affichage à l'opérateur. De même, certains ajustements automatiques peuvent être effectués soit au sol, soit à bord de l'aéronef.

Enfin, ce procédé peut être mis en oeuvre dans des stations sol de contrôle aérien pour guider l'opérateur dit « ATC », acronyme signifiant « Air Traffic Control » dans le choix des instructions à donner aux aéronefs sous son contrôle, de manière à optimiser des manoeuvre d'évitement ou des manoeuvres de séquencement dans les procédures d'arrivée et d'approche des aéronefs.

Dans la suite du texte, on utilise indifféremment les termes « pilote » ou « utilisateur » pour désigner l'opérateur humain qui assure la gestion du vol de l'aéronef.

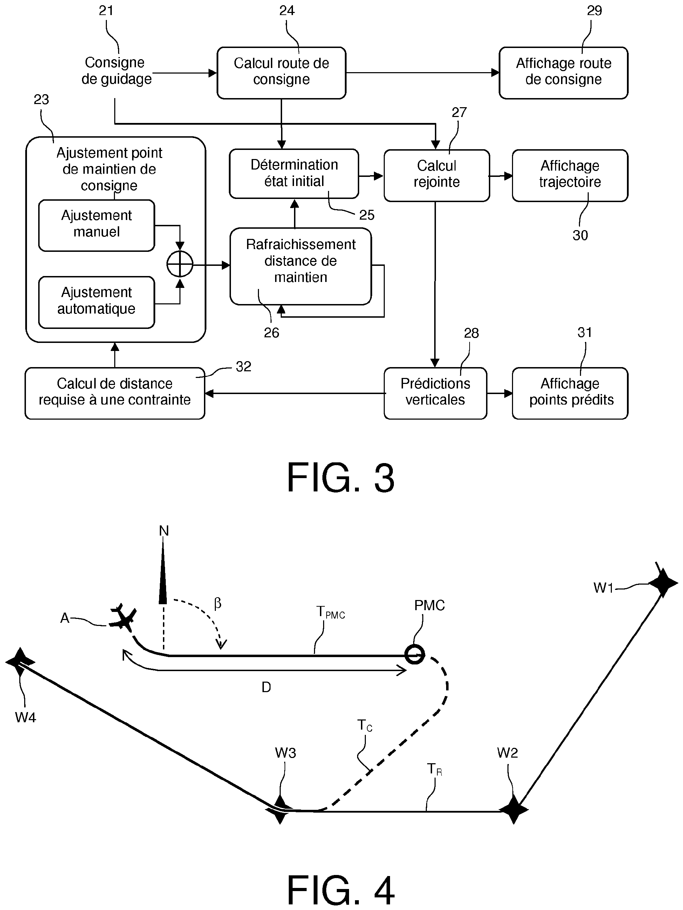

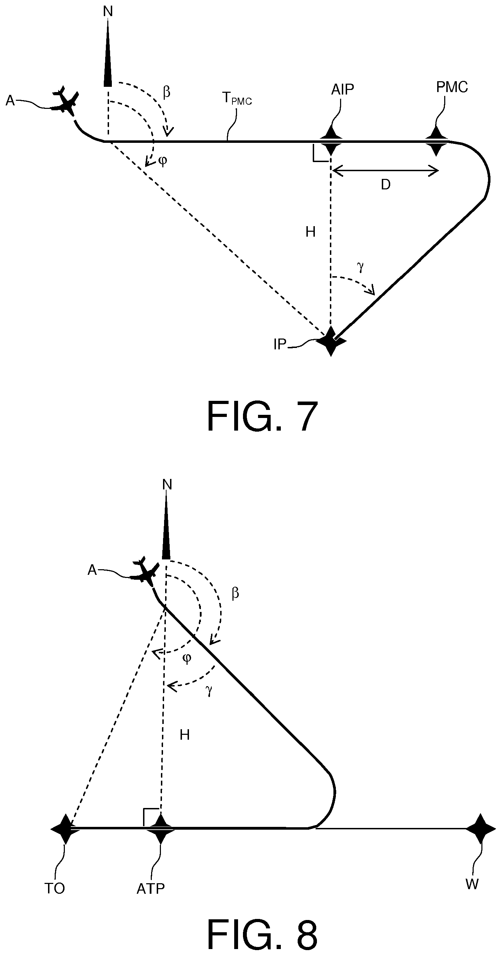

L'ensemble du procédé d'ajustement d'une trajectoire de rejointe d'un plan de vol d'un aéronef selon l'invention est représenté sur la figure 2. Sur cette figure et sur les figures 3 et 7, les étapes du procédé sont représentées par des cartouches, les flèches indiquant les liens fonctionnels entre les différents cartouches. Ce procédé comporte essentiellement trois différents types d'étapes qui sont successivement des étapes de sélection par le pilote ou l'utilisateur, des étapes de calcul et des étapes d'affichage.

Au moyen des différentes interfaces homme-machine mises à sa disposition, le pilote sélectionne, valide ou modifie un des trois paramètres suivants :

-    La consigne de guidage à suivre ;

- La section du plan de vol à rejoindre ;
- Le point de maintien de consigne de guidage.

Ces différents ajustements sont représentés sur la figure 2 par les cartouches 21, 22 et 23, l'interaction étant représentée par le cartouche 20.

Les différentes étapes de calcul sont représentées dans les cartouches 24 à 28. Ces étapes sont les suivantes :

- Calcul de la route de consigne à partir de la connaissance de l'état de l'aéronef et de la consigne de guidage (cartouche 24) ;
- Rafraîchissement de la distance de maintien de consigne de guidage (cartouche 26) ;
- Calcul de l'état initial à partir duquel la trajectoire de rejointe regagne le plan de vol (cartouche 25) ;
- Calcul de la trajectoire de rejointe (cartouche 27) ;
- Calcul des prédictions verticales (cartouche 28).

Les différentes étapes d'affichage sont représentées dans les cartouches 29 à 31. Il s'agit d'afficher :

- La route de consigne de guidage (cartouche 29) ;
- La trajectoire de rejointe (cartouche 30) ;
- Les points prédits (cartouche 31).

Le procédé selon l'invention concerne l'ajustement d'un point de maintien de consigne de guidage sur la trajectoire de rejointe d'un plan de vol par un aéronef.

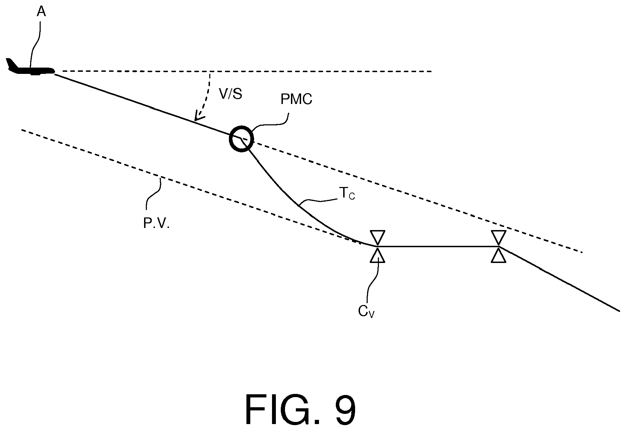

On entend par consigne de guidage la fixation d'une valeur de consigne à un paramètre de vol de l'aéronef, qu'il s'agisse du cap, d'une pente verticale, ou d'une vitesse. A titre de premier exemple non limitatif, les figures 4 à 8 représentent la mise en oeuvre du procédé dans le cas d'une consigne de cap. A titre de second exemple représenté sur la figure 9, une trajectoire de rejointe comportant une consigne de pente est décrite.

On entend par point de maintien de consigne de guidage un point situé le long de la trajectoire générée par la consigne de guidage. Un point de maintien de consigne de guidage correspond à un point géographique défini le long de la trajectoire de consigne de guidage, soit par une distance, soit par une durée temporelle, soit par une variation d'altitude ou une altitude à atteindre, soit par le croisement de la trajectoire avec une radiale, c'est-à-dire une demi-droite définie par un point géographique et une direction.

L'aéronef se déplaçant le long de la trajectoire de consigne de guidage, sa distance au point de maintien de consigne de guidage décroit au cours du temps. Une fonction spécifique met à jour périodiquement la distance courante du point de maintien de consigne, en prenant en compte entre autre la vitesse courante et le temps écoulé. La période de cette mise à jour est suffisamment courte pour assurer une continuité de l'affichage sans effet gênant pour le pilote. De préférence, l'affichage de la trajectoire de consigne de guidage est rafraîchi au même rythme, ou alors plus fréquemment que la distance du point.

Lorsque le pilote interagit sur la position du point de maintien de consigne, la position du point de maintien de consigne en début d'interaction est mémorisée. Ce point mémorisé est nommé l'historique de point de maintien de consigne, et il est également défini par une distance le long de la trajectoire de consigne de guidage. La distance de l'historique de point de maintien de consigne est mise à jour de la même manière au cours du temps, de manière qu'en cas d'annulation, la position retrouvée soit placée correctement le long de la consigne de guidage. Cette mise à jour est permanente, y compris pendant les interactions du pilote : les incréments et décréments de distance demandés par le pilote s'ajoutent à la valeur courante de distance périodiquement mise à jour.

Enfin, lorsque la valeur de distance devient nulle, le point de maintien de consigne revient à sa valeur de distance par défaut. En l'absence d'interaction pilote sur la distance, le point de maintien de consigne est supprimé. Cette mise à jour peut également être mise en oeuvre de manière similaire, lorsque le point de maintien de consigne est spécifié par un délai ou une variation d'altitude.

La figure 3 représente le procédé selon l'invention lorsque la trajectoire de rejointe comporte un point de maintien de consigne de guidage. Il comporte sensiblement les mêmes cartouches que le synoptique de la figure 2 à l'exception d'un cartouche supplémentaire 32 intitulé « Calcul de distance requise à une contrainte » détaillé dans la suite de la description. Le cartouche 23 comporte deux options possibles pour l'ajustement du point de maintien de consigne. En effet, cet ajustement peut être fait en manuel ou en automatique par le système de gestion de vol.

La figure 4 représente une trajectoire de rejointe selon l'invention mettant en oeuvre un point PMC de maintien de consigne de cap. A un instant donné, l'aéronef A est à une distance D du point PMC de maintien de consigne de cap. La consigne de cap est définie par l'angle $\beta$ que fait la direction à suivre avec le nord N géographique. La trajectoire de référence $T_R$ du plan de vol passait par les points de passage W1 à W4. La trajectoire de l'appareil A comprend deux parties. Dans un premier temps, l'appareil suit la trajectoire $T_{PMC}$ jusqu'au point de consigne PMC. Dans un second temps, à partir de ce point, il suit la trajectoire de capture $T_C$ jusqu'à rallier la trajectoire de référence en un point situé, sur la figure 4, entre les points de passage W2 et W3.

Comme il a été dit, l'ajustement du point de maintien de consigne peut être fait en manuel. Lorsqu'un point de maintien de consigne est défini, le pilote peut augmenter ou diminuer la distance définissant la position de ce point de maintien de consigne le long de la trajectoire portée par la consigne de cap, de manière à le déplacer le long de la trajectoire de consigne de cap. Divers moyens d'interaction sont envisageables pour faire varier cette distance :

- Sur un écran tactile, on peut désigner du doigt le point de maintien de consigne, puis le déplacer par un mouvement de glisser continu sur l'écran jusqu'à sa nouvelle position ;
- Dans un cockpit interactif équipé d'un poste de commande de type KCCU et d'écrans de visualisation interactifs, le pointeur peut être placé sur le point de maintien de consigne, puis une rotation sur la molette de défilement du KCCU déplace le point de maintien de consigne. Les incréments de ce déplacement peuvent être définis à proportion de l'échelle d'affichage courante de l'écran de navigation ;
- Sur une interface de type MCDU ou un moyen équivalent équipé de touches, l'interaction peut être sélectionnée par un appui de touche, puis deux touches dédiées permettent d'incrémenter ou décrémenter la distance du point de maintien de consigne.
- Enfin, l'interface peut également proposer la saisie d'une distance, d'un temps de vol ou d'une altitude.

Une fois le point positionné de manière satisfaisante, le pilote valide sa position, soit par un appui touche dédié, ou une désignation à l'écran. Dans le cas d'un écran tactile cette validation finale est optionnelle, la fin d'appui à l'écran après le mouvement de glisser pouvant être interprétée comme une validation. Toutefois, une confirmation peut aussi être demandée, pour permettre l'annulation de la modification.

Si la nouvelle position du point ne convient pas au pilote, il peut aussi annuler la modification, par un appui touche différent de la validation, ou une désignation distincte sur l'écran. Dans ce cas, la position du point de maintien de consigne au début de l'interaction est restituée. Lorsqu'aucun point de maintien de consigne n'est défini, la distance par défaut du point de maintien de consigne est nulle.

Enfin la modification de distance opérée par le pilote reste bornée : la distance résultante ne peut devenir inférieure à 0, ni excéder par exemple la distance maximale affichée à l'écran de navigation à l'échelle choisie par le pilote.

Comme il a été dit, l'ajustement du point de maintien de consigne peut être fait en automatique. Dans certains cas, la trajectoire de rejointe depuis la consigne de cap courante n'offre pas une distance satisfaisante jusqu'à une contrainte donnée ou jusqu'à la destination. Il peut s'agir d'une distance insuffisante pour permettre les conditions de stabilisation de l'aéronef avant l'atterrissage. Dans ce cas, la marge est trop faible entre la distance dite « RDTL », acronyme signifiant « Required Distance To Land » requise pour atterrir et la distance selon la trajectoire de rejointe jusqu'à la piste. La distance peut également être trop courte pour que la prochaine contrainte d'altitude puisse être tenue avec une pente de descente à poussée minimale.

Dans d'autres cas, le pilote peut avoir positionné manuellement un point de maintien de consigne inutilement loin, conduisant à une longueur de trajectoire inutilement longue pour la descente, ou la durée de vol requise, et pouvant obliger à un surplus de poussée et une dépense de carburant inutile. Un raccourcissement de trajectoire peut alors être proposé. Dans ces différents cas, le procédé peut déterminer automatiquement un point de désélection de cap ajusté au besoin.

En s'appuyant sur les prédictions verticales, on peut déterminer une modification souhaitée de longueur de trajectoire $\Delta D$. Cette modification de longueur peut être directement l'écart entre une marge souhaitée et la marge courante pour assurer la stabilisation ou peut être déduite de la pente ou de la vitesse sol courante, par rapport à une contrainte d'altitude ou de temps. L'ajustement de la distance du point de maintien de consigne de cap dépend alors du type de rejointe latérale du plan de vol.

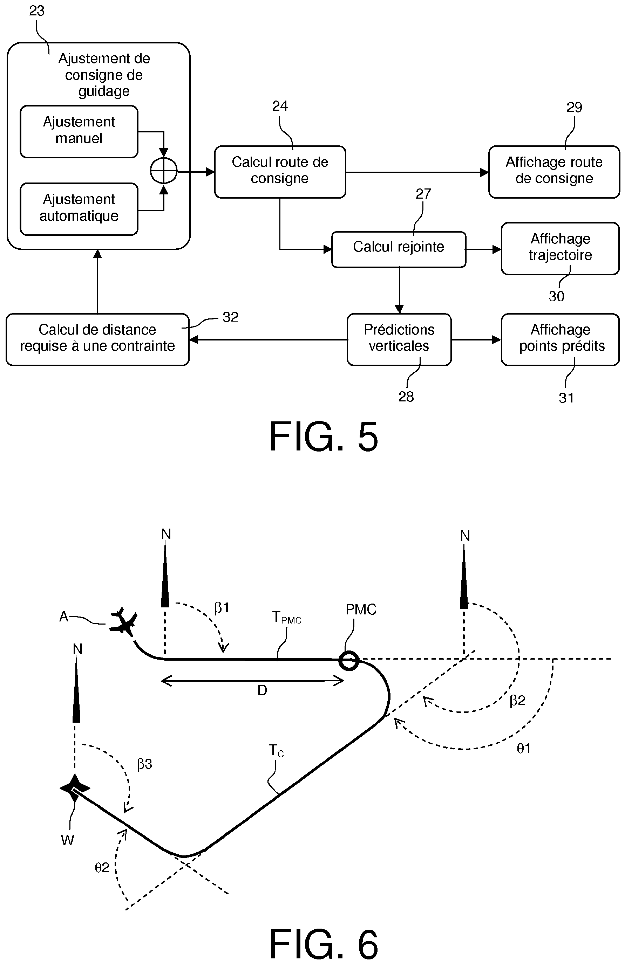

La figure 5 représente le procédé selon l'invention lorsque la trajectoire de rejointe résulte de l'ajustement d'une consigne de guidage. Il comporte sensiblement les mêmes cartouches que le synoptique de la figure 2 à l'exception d'un cartouche supplémentaire 32 intitulé « Calcul de distance requise à une contrainte » détaillé dans la suite de la description. Le cartouche 23 comporte deux options possibles pour l'ajustement de la consigne de guidage. En effet, cet ajustement peut être fait en manuel ou en automatique.

Dans une première variante de réalisation, la trajectoire de rejointe est ajustée par modification d'un cap de consigne. L'ajustement manuel correspond à la saisie par le pilote d'une valeur de cap au pilote automatique, comme elle peut se faire classiquement sur les aéronefs. Cette valeur peut être saisie numériquement, sélectionnée par rotation d'une molette, désignée de manière interactive sur un écran tactile ou au moyen d'un pointeur graphique ou encore modifiée interactivement par action sur un manche.

La consigne modifiée est affichée au pilote, soit sous forme numérique, soit par indication graphique sur son écran de navigation ou de pilotage. La trajectoire qui résulte de l'application de cette consigne est affichée à l'écran de navigation par la fonction de calcul et d'affichage de la route de consigne. De cette manière, le pilote visualise immédiatement l'effet de la consigne appliquée.

Dans le cas d'un ajustement automatique du cap de consigne, le système peut afficher le cap déterminé automatiquement, sans modifier le cap de consigne sélecté. Tant qu'aucune modification manuelle par le pilote n'intervient, il est envisageable d'afficher la trajectoire de rejointe selon le cap déterminé automatiquement ou selon le cap de consigne sélectionné, à charge pour le pilote de l'ajuster au cap déterminé automatiquement. Lorsqu'une modification manuelle par le pilote est effectuée, la valeur de cap correspondant à l'ajustement automatique peut alors rester indiquée sur l'échelle de cap tandis que la trajectoire de rejointe est affichée selon le cap ajusté manuellement par le pilote.

Lorsque le cap de consigne n'est pas le cap courant, l'aéronef doit alors manoeuvrer pour rejoindre la consigne de cap. Dans ce cas, la trajectoire de consigne de cap est constituée typiquement de trois segments : un segment de mise en roulis, un segment courbe de virage entre le cap courant et le cap de consigne, puis un segment rectiligne selon le cap de consigne. Le rayon de virage, la longueur du segment de mise en roulis et la direction du cap de consigne, prennent en compte la vitesse de l'avion ainsi que la force et la direction du vent mesuré au niveau de l'aéronef. Mais elle peut être éventuellement constituée d'un ensemble de segments successifs approximant les positions et orientations successives de l'aéronef au cours de l'application de la consigne, et prenant en compte de manière précise l'effet du vent et la dynamique de l'aéronef.

Cette trajectoire résultant de la consigne est ensuite affichée au pilote sur son écran de navigation. Le long de cette trajectoire, sont placés certains points prédits ainsi que le point de maintien de consigne de cap. La trajectoire résultant de la consigne de cap doit être affichée, et proche de la trajectoire qui sera effectivement volée par l'aéronef de façon que le point de maintien de consigne placé le long de cette trajectoire constitue une hypothèse suffisamment stable pour servir de position initiale de la trajectoire de rejointe, et continuer de correspondre au choix effectué par le pilote.

Dans une seconde variante de réalisation, le pilote demande à rejoindre prioritairement la section de plan de vol souhaitée en suivant la trajectoire de consigne de cap jusqu'à trouver une intersection avec un segment de la section de plan de vol. Cela permet par exemple de maintenir le cap de consigne jusqu'à l'intersection du plan de vol, même si une autre forme de rejointe, comme, par exemple, une rejointe selon un angle prédéterminé permet une rejointe plus proche ou plus courte du plan de vol.

Dans ce cas, une intersection avec la trajectoire de consigne de cap est recherchée pour chaque segment de la section de plan de vol à rejoindre. Si plusieurs intersections existent, selon les modes de réalisation, on choisit l'intersection la plus proche le long de la trajectoire de consigne de cap qui constitue le choix le plus naturel ou l'intersection au plus tôt dans la liste de segments à capturer. Cette dernière solution est plus flexible, lorsqu'elle est associée au choix du premier segment à capturer.

Si aucune intersection n'est trouvée, alors un message d'avertissement peut être affiché au pilote, et la trajectoire de rejointe se calcule de la manière usuelle.

Une fois la première étape de calcul de la trajectoire de rejointe effectuée selon les hypothèses ci-dessus, la suite de la trajectoire de rejointe se fait conformément aux procédés existants. A titre d'exemple, le brevet FR 3 031 175 intitulé «Procédé de rejointe automatique d'une route d'un aéronef » décrit une procédure de ce type. Les hypothèses de calcul de cette trajectoire de rejointe nécessitent cependant quelques ajustements liés au procédé de gestion de la trajectoire de rejointe selon l'invention. Ce sont les suivants :

- Le cap de consigne est celui défini par le pilote ou peut être un cap ajusté automatiquement pour satisfaire une contrainte ;
- Au lieu d'utiliser la position et l'orientation courante de l'aéronef comme position de départ, on utilise la position et l'orientation définis par la position du point de maintien de consigne le long de la trajectoire de consigne de cap, et la consigne de cap ;
- Au lieu de déterminer la rejointe sur l'ensemble du plan de vol, on la détermine sur la section définie par le pilote.
- Si le pilote a choisi de recherche prioritairement une intersection le long de la trajectoire de consigne de cap, ce mode de rejointe est recherché en premier, avant de mettre en oeuvre les autres modalités de rejointe.

Lorsqu'un point de maintien de consigne est défini, à savoir une distance de maintien de consigne non nulle et que sa distance est inférieure à la longueur cumulée du segment de mise en roulis et du segment de virage pour acquérir le cap de consigne, alors la position initiale de l'avion pour la trajectoire de rejointe est placée en fin de virage d'acquisition du cap de consigne, de manière à respecter le cap spécifié par le pilote. A charge pour le pilote de modifier la consigne de cap pour réduire le virage si nécessaire. La trajectoire de rejointe est affichée à l'écran de navigation pour permettre au pilote d'évaluer l'impact du point de maintien de consigne choisi. De même, les prédictions sont calculées le long de cette trajectoire, et fournies au pilote. La mise à jour de ces affichages peut être moins fréquente que l'affichage de la consigne de cap et du point de maintien de consigne, car elles s'appuient sur l'exécution de la consigne en cours, et donc sont relativement stables. Une période de trois secondes est souvent considérée comme suffisante pour permettre au pilote sa prise de décision dans la gestion du vol.

L'évolution des paramètres de l'aéronef au long du vol peut alors être calculée le long de cette trajectoire de rejointe, puis le long du plan de vol jusqu'à la destination, selon l'état de l'art des prédictions calculées par un gestionnaire de vol.

En particulier, un profil de descente peut être calculé depuis la destination, et en remontant le long de la trajectoire jusqu'à la position de l'aéronef, en prenant en compte les différentes contraintes de vitesse, d'altitude ou de temps le long de la trajectoire.

Puis les paramètres avion peuvent être prédits depuis la position avion, selon les logiques de chaque phase de vol, jusqu'à la destination. Lorsque l'aéronef est en montée et en croisière, le calcul peut éventuellement s'arrêter à la position prédite de début de descente conforme au profil de descente. Lorsque l'aéronef est en phase de descente, les prédictions prennent en compte la situation de l'aéronef par rapport au profil de descente, et déterminent la rejointe puis le suivi de ce profil jusqu'à la destination.

Enfin, un calcul de réduction d'énergie peut être calculé depuis la position avion jusqu'à l'énergie requise pour la stabilisation, puis selon la pente d'approche finale depuis la hauteur de stabilisation jusqu'au seuil de piste. Cette distance appelée RDTL peut être comparée à la distance de l'avion au seuil de piste le long de la trajectoire de rejointe. La différence fournit une marge de stabilisation qui peut être affichée au pilote.

Toutes ces indications permettent au pilote d'assurer un suivi précis de son vol, et en particulier de sa descente, prenant en compte la trajectoire de rejointe latérale.

Dans certains cas, les prédictions verticales permettent d'identifier que la longueur de trajectoire est insuffisante pour satisfaire un critère du plan de vol en un point donné :

- La longueur de trajectoire est insuffisante pour tenir une contrainte d'altitude, car la pente requise excéderait les capacités de l'aéronef ou l'obligerait à accélérer de manière excessive,
- La longueur de trajectoire est insuffisante pour réduire l'énergie de l'aéronef et permettre sa stabilisation à la vitesse requise pour l'approche à une hauteur minimale au-dessus du seuil de piste,
- La longueur de trajectoire ne permet pas de respecter une contrainte de temps en un point donné, ou de manière équivalente ne permet pas d'assurer un espacement temporel souhaité derrière un autre aéronef en un point donné,
- La longueur de trajectoire ne correspond pas à la distance optimale de vol permettant de tenir des conditions d'altitude de vitesse et de temps tout en maintenant un vol à poussée minimale.

Pour tous ces critères, il est possible de déterminer une distance requise jusqu'au point où se trouve la contrainte à satisfaire :

- Pour une contrainte d'altitude, il s'agit de l'erreur d'altitude au niveau de la contrainte, divisée par la pente volable par l'aéronef,
- Pour une contrainte de stabilisation, il s'agit de l'excès d'énergie au point de stabilisation ramené au poids de l'aéronef, divisé par l'énergie résiduelle spécifique ou « Specific Excess Power » et multiplié par la vitesse sol,
- Pour une contrainte de temps, il s'agit de l'erreur de temps à la contrainte, multipliée par la vitesse sol,
- Pour une distance optimale permettant le maintien d'un vol à poussée minimale, il est nécessaire de déterminer un profil modélisé ajustable d'altitude et de vitesse de l'aéronef qui assure ladite poussée minimale.

Le résultat de cette fonction est une longueur de trajectoire souhaitée jusqu'à un point donné. L'ajustement automatique de la trajectoire n'est possible selon le procédé que si le point sur lequel porte la contrainte se trouve après le premier des segments de la section à rejoindre, et si la rejointe se produit sur un segment situé au plus tard à ce point. Au besoin, la section à rejoindre peut être restreinte pour s'arrêter au plus tard au point portant la contrainte. C'est en particulier le cas pour la stabilisation.

Les prédictions dépendant de la trajectoire latérale, et en particulier si l'ajustement de longueur est important, les ajustements précédents, qui constituent des approximations linéaires, peuvent nécessiter des itérations successives. En ce cas, une fois calculée la trajectoire ajustée à la distance souhaitée, on détermine l'erreur résiduelle au point portant la contrainte, et tant que cette erreur est supérieure à un seuil donné, on itère l'ajustement sur une nouvelle longueur de trajectoire souhaitée.

A titre de premier exemple de mise en oeuvre du procédé selon l'invention, la rejointe se fait selon une capture d'un segment ou « leg » du plan de vol selon un angle de capture spécifié. Cette rejointe est illustrée sur la figure 6. Sur cette figure, les mêmes références que celles de la figure 4 ont été adoptées. La trajectoire de rejointe part de l'aéronef A, passe par le point PMC pour aboutir au point de passage W du plan de vol. Comme on le voit sur cette figure 6, la trajectoire comporte trois caps successifs qui sont :

- La consigne de cap courante $\beta1$,
- Le cap de capture $\beta2$,
- Le cap du leg à capturer $\beta3$.

Ces caps définissent donc deux changements de cap successifs :

- Le premier changement $\theta1$ est égal à $\beta2-\beta1$. Il débute au point de maintien de consigne de cap PMC ;
- Le second changement $\theta2$ est égal à $\beta3-\beta2$. Il permet à l'aéronef de regagner le segment de vol situé avant le point de passage W.

La variation de longueur de trajectoire $\delta S$ résultant d'une variation de distance de maintien du cap de consigne $\delta D$ peut alors être exprimée comme :

$$\frac{\partial S}{\partial D} = \left( (1-\cos(\theta_1)) + \frac{\sin(\theta_1)}{\sin(\theta_2)}(1-\cos(\theta_2)) \right)$$

Cette formule reste valide tant que les distances restent assez grandes par rapport au rayon de virage pour que chaque cap puisse être établi avant le début du changement de cap suivant. De plus, elle suppose, pour être applicable, que les changements de caps soient suffisamment significatifs. En particulier, si les caps β1 et β3 ou β1 et β2, sont identiques, la variation de distance sera nulle. De même, les caps β2 et β3 sont nécessairement distincts car ils définissent l'angle de capture spécifié.

Au besoin, cette formule peut être appliquée de manière itérative, en déterminant la longueur de trajectoire S correspondant à la trajectoire latérale obtenue, et en ajustant la distance de maintien du cap de consigne D pour réduire l'écart par rapport à la longueur de trajectoire souhaitée.

De plus, si la longueur de maintien de consigne de cap D obtenue conduit à capturer un autre segment du plan de vol, alors l'itération peut être poursuivie en prenant en compte l'orientation du nouveau segment.

Si le cap de capture β2 ne peut plus être établi, alors la longueur D de maintien de consigne est bornée pour permettre la capture du segment. La longueur de trajectoire souhaitée ne pouvant être obtenue, la contrainte qui nécessitait cette longueur ne peut être tenue sans mettre en oeuvre des moyens complémentaires de réduction de l'erreur et le pilote est informé de la non-tenue de la contrainte.

A titre de second exemple de mise en oeuvre du procédé selon l'invention, la rejointe est une rejointe directe vers un point spécifié. Ce type de rejointe est illustré sur la figure 7. Sur cette figure 7, les mêmes références que celles des figures 4 et 6 ont été adoptées. La trajectoire de rejointe part de l'aéronef A, passe par le point PMC pour aboutir au point de capture IP du plan de vol sans passer nécessairement par un leg du plan de vol.

En projetant orthogonalement le point de capture IP sur la consigne de cap courante définie par l'angle β, on définit un point AIP le long du cap de consigne. Si on note γ l'angle entre le cap d'arrivée au point de capture IP et l'axe défini par IP et AIP, alors la variation de longueur de trajectoire δS résultant d'une variation de distance de maintien du cap de consigne δD peut alors être exprimée par :

$$\frac{\partial S}{\partial D} = 1 + \eta \sin \gamma$$

$$\eta = sign(\sin(\varphi - \beta))$$

Au besoin, cette formule peut être appliquée de manière itérative, en déterminant la longueur de trajectoire S correspondant à la trajectoire latérale obtenue, et en ajustant la distance de maintien du cap de consigne D pour réduire l'écart par rapport à la longueur de trajectoire souhaitée.

A titre de troisième exemple de mise en oeuvre du procédé selon l'invention, la rejointe est une rejointe par ajustement automatique de cap. Ce type de rejointe est illustré sur la figure 8. Sur cette figure 8, les mêmes références que celles des figures 4, 6 et 7 ont été adoptées. La trajectoire de rejointe part de l'aéronef A et rejoint le leg situé entre les points de passage W et ATP pour aboutir au point de passage ATP du plan de vol.

Lorsque le pilote a activé la fonction de recherche prioritaire d'une intersection de la trajectoire donnée par le cap avec la section de plan de vol à rejoindre, le long de la trajectoire de consigne de cap, il est possible de faire varier la longueur de trajectoire par ajustement du cap. Si une longueur de trajectoire est souhaitée pour satisfaire une contrainte ou un critère de vol, alors un ajustement automatique du cap peut être proposé au pilote.

Si on projette orthogonalement la position de l'aéronef sur le segment capturé, on définit un point ATP à une distance H de l'aéronef, la direction entre l'aéronef et le point ATP étant orthogonale au segment capturé. Si on note β le cap de consigne, φ le relèvement depuis l'avion du point terminal TO du segment à capturer, et γ l'angle entre la route de consigne et la normale au segment à capturer au point ATP, alors la variation de longueur de trajectoire induite par une variation de l'angle de capture est :

$$\frac{\partial S}{\partial \gamma} = \left( \frac{H}{\cos^2 \gamma} - \frac{R}{1 - \eta \sin \gamma} \right)(1 + \eta \sin \gamma)$$

$$\eta = sign(\sin(\varphi - \beta))$$

Au besoin, cette formule peut être appliquée de manière itérative, en déterminant la longueur de trajectoire S correspondant à la trajectoire latérale obtenue, et en ajustant la distance de maintien du cap de consigne D pour réduire l'écart par rapport à la longueur de trajectoire souhaitée.

De plus, si la route de consigne β obtenue conduit à capturer un autre segment du plan de vol, alors l'itération peut être poursuivie en prenant en compte l'orientation du nouveau segment.

A titre de quatrième exemple de mise en oeuvre du procédé selon l'invention, la rejointe est une rejointe verticale à partir du maintien d'une consigne verticale qui peut être une consigne de pente ou une consigne de vitesse verticale. Ce cas d'application est illustré sur la figure 9. L'aéronef A est en écart par rapport à son plan de vol vertical P.V., représenté en traits pointillés, et asservit son vol sur une consigne verticale, exprimée sur la figure en vitesse verticale V/S, signifiant « Vertical Speed ». Un point de maintien de consigne PMC est positionné le long de la consigne verticale, à partir duquel une trajectoire de rejointe est calculée, par exemple en poussée minimale à vitesse constante. Le pilote peut ajuster lui-même le point PMC, ou celui-ci peut être ajusté automatiquement pour permettre la tenue d'une contrainte verticale $C_V$ du plan de vol, symbolisée sur la figure par les deux séries de deux triangles opposés.

**Revendications**

1. Procédé d'ajustement d'une trajectoire de rejointe d'un plan de vol d'un aéronef, ledit procédé étant mis en oeuvre dans un système de gestion de vol (1) dudit aéronef, **caractérisé en ce que**, dans une première étape, la trajectoire de rejointe ($T_{PMC}$) comporte un point de maintien de consigne de guidage (PMC) à atteindre situé dans le prolongement d'une consigne de guidage, ledit point de maintien de consigne de guidage correspondant à un point géographique le long de la consigne de guidage, ledit point géographique étant défini soit par une distance, soit par une durée temporelle, soit par une variation d'altitude ou une altitude à atteindre, la consigne de guidage n'étant plus nécessairement maintenue passé ce point de maintien de consigne.

2. Procédé d'ajustement d'une trajectoire de rejointe d'un plan de vol selon la revendication 1, **caractérisé en ce que**, à partir du point de maintien de consigne de guidage, la trajectoire de rejointe est calculée de façon que ladite trajectoire de rejointe regagne le plan de vol au plus tôt.

3. Procédé d'ajustement d'une trajectoire de rejointe d'un plan de vol selon l'une des revendications précédentes, **caractérisé en ce que** le point de maintien de consigne de guidage est ajusté de façon manuelle par un opérateur en fonction d'une contrainte de pilotage ou de navigation.

4. Procédé d'ajustement d'une trajectoire de rejointe d'un plan de vol selon l'une des revendications 1 à 2, **caractérisé en ce que**, lorsque, compte-tenu d'une contrainte de pilotage ou de navigation, la longueur de trajectoire est inappropriée pour respecter ladite contrainte en suivant la trajectoire exploitant le point de maintien de consigne de guidage en cours, la première étape est précédée d'une étape préliminaire de résolution de ladite contrainte, le point de maintien de consigne de guidage étant ajusté de façon automatique.

5. Procédé d'ajustement d'une trajectoire de rejointe d'un plan de vol selon l'une des revendications précédentes, **caractérisé en ce que** la première étape est précédée d'une trajectoire de rejointe d'une consigne de guidage.

6. Procédé d'ajustement d'une trajectoire de rejointe d'un plan de vol selon l'une des revendications précédentes, **caractérisé en ce que** la première étape est précédée d'une étape de recherche de l'intersection de la trajectoire de consigne de guidage en cours avec un segment du plan de vol.

7. Procédé d'ajustement d'une trajectoire de rejointe d'un plan de vol selon l'une des revendications précédentes, **caractérisé en ce que** la consigne de guidage est une consigne de cap.

8. Procédé d'ajustement d'une trajectoire de rejointe d'un plan de vol selon la revendication 7, **caractérisé en ce que** la dite étape de rejointe d'un cap de consigne comporte un ensemble de segments droits ou courbes suivi du segment droit de maintien de la consigne de cap.

9. Procédé d'ajustement d'une trajectoire de rejointe d'un plan de vol selon la revendication 7, **caractérisé en ce que** ladite étape de rejointe d'un cap de consigne comporte au moins trois segments, un segment de mise en roulis de l'aéronef, un segment courbe de virage entre le cap courant suivi par l'aéronef et le cap de consigne et un segment rectiligne selon le cap de consigne.

10. Procédé d'ajustement d'une trajectoire de rejointe d'un plan de vol selon l'une des revendications 7 à 9, **caractérisé en ce que** le cap de consigne est ajusté de façon manuelle par un opérateur ou de façon automatique en fonction d'une contrainte de distance de navigation

11. Procédé d'ajustement d'une trajectoire de rejointe d'un plan de vol selon l'une des revendications 7 à 10, **caractérisé en ce que** le segment du plan de vol étant déterminé, la trajectoire de rejointe comporte deux changements de cap successifs, le premier permettant de passer d'un cap de consigne à un cap de capture et le second changement de cap permettant de passer du cap de capture au cap du segment du plan de vol.

12. Procédé d'ajustement d'une trajectoire de rejointe d'un plan de vol selon l'une des revendications 7 à 10, **caractérisé en ce qu'**une fois atteint le point de maintien de consigne le long du cap de consigne, la trajectoire de rejointe consiste à rejoindre directement un point désigné du plan de vol.

13. Procédé d'ajustement d'une trajectoire de rejointe d'un plan de vol selon l'une des revendications 1 à 6, **caractérisé en ce que** la consigne de guidage est une consigne de pente verticale.

14. Procédé d'ajustement d'une trajectoire de rejointe d'un plan de vol selon l'une des revendications 1 à 6, **caractérisé en ce que** la consigne de guidage est une consigne de vitesse longitudinale.

**15.** Procédé d'ajustement d'une trajectoire de rejointe d'un plan de vol selon l'une des revendications 1 à 6, **caractérisé en ce que** la consigne de guidage est une consigne de vitesse verticale.

**16.** Procédé d'ajustement d'une trajectoire de rejointe d'un plan de vol selon l'une des revendications précédentes, **caractérisé en ce que** la portion du plan de vol vers laquelle est calculée la trajectoire de rejointe est déterminée de façon automatique ou manuelle.

## FIG. 1

## FIG. 2

FIG. 3

FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3031175